# EUROPEAN PATENT APPLICATION

(11) **EP 1 313 288 A2**
(43) Date of publication of application: **21.05.2003**
(21) Application number: 02025111.2
(22) Date of filing: 08.11.2002
(51) Int. Cl.: H04L 29/06

(54) **Method for controlling incoming call directed to group in voice over internet protocol system**

(30) Priority: 20.11.2001 KR 2001072466
(71) Applicant: SAMSUNG ELECTRONICS CO., LTD., Suwon-City, Kyungki-do (KR)
(72) Inventor: Sung, Young-Joo, Suwon-city, Kyungki-do (KR)
(74) Representative: Grünecker, Kinkeldey, Stockmair & Schwanhäusser Anwaltssozietät

(57) **Abstract**

A gatekeeper of a voice over internet protocol (VoIP) system controls an incoming call directed to a group. The gatekeeper carries out the steps of: defining a plurality of terminals selected by an operator request as the group for taking a group call service, creating terminal information for the terminals and group information for a plurality of defined groups in the form of a table, and managing the table; and determining, using the table, whether the incoming call is directed to the group upon receiving the incoming call, generating a group call using the group information if the incoming call is directed to the group, and transmitting the group call to respective members belonging to the group.

## Description

The present invention relates to a voice over internet protocol (VoIP) system and, more particularly, to a method for controlling an incoming call directed to a group in the voice over internet protocol system.

Conventionally, a group call provision function is implemented by a key telephone system (KTS), a private branch exchange (PBX), *etc.* over a public switched telephone network (PSTN). The key telephone system or the private branch exchange provides a group call service, which can simultaneously transmit a group call as an incoming call directed to a particular group to respective members belonging to the particular group so that all the members belonging to the particular group can receive the group call.

Along with an expansion of the Internet, a voice over internet protocol (VoIP) system is defined as an international telecommunications union-telecommunications standardization sector (ITU-T) standard H.323 protocol. A voice over internet protocol system provides a new scheme of providing communication services, wherein voice data communication over the Internet, rather than the public switched telephone network, is provided. Unlike an existing scheme, since the voice data communication over the Internet employs a packet-based network and, therefore, a fee for using national/international telephone lines is not necessary to be paid, the voice over internet protocol system can cheaply carry out the voice data communication. The voice over internet protocol system is capable of transmitting video information as well as audio information using the international telecommunications union-telecommunications standardization sector (ITU-T) standard H.323 protocol.

A technique for implementing various functions of an existing telephony system based on the voice over internet protocol system is under study, but a function for providing a group call is not implemented in the voice over internet protocol system. Accordingly, the function for providing the group call is strongly needed in the voice over internet protocol system.

Therefore, the present invention has been developed in view of the above problems, and it is an object of the present invention to provide a method for controlling an incoming call directed to a group in order to provide a group call capability in a voice over internet protocol (VoIP)system.

It is another object of the present invention to provide a method and an apparatus for controlling an incoming call directed to a group in order to provide a group call capability in a voice over internet protocol (VoIP) system without modifying an H.323 protocol.

In accordance with one aspect of the present invention, the above and other objects can be accomplished by the provision of a method for controlling an incoming call directed to a group in a gatekeeper of a voice over internet protocol (VoIP) system, comprising the steps of: a) defining a plurality of terminals selected by an operator request as the group for taking a group call service, creating terminal information for the terminals and group information for a plurality of defined groups in the form of a table, and managing the table; and b) determining, using the table, whether the incoming call is directed to the group upon receiving the incoming call, generating a group call using the group information if the incoming call is directed to the group, and transmitting the group call to respective members belonging to the group.

In accordance with another aspect of the present invention, there is provided a method for controlling incoming calls directed to groups in a gatekeeper of a voice over internet protocol (VoIP) system, comprising the steps of: a) defining a plurality of terminals selected by an operator request as a group for taking a group call service, creating terminal information for the terminals and group information for a plurality of defined groups in the form of a table, and managing the table; b) determining, using the table, whether each of incoming calls is directed to the group upon sequentially receiving the incoming calls, generating a group call using the group information corresponding to the group if an incoming call is directed to the group, the group call basically having the group information and unique member call identifiers (IDs) for members belonging to the group, and storing group calls in a queue; and c) distinguishing different groups for the group calls stored in the queue, and independently transmitting the group call to the members being in an idle state.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
Fig. 1 is a view showing an H.323-based packet network;
Fig. 2 is a block diagram showing a gatekeeper in accordance with the present invention;
Fig. 3 is a view illustrating a function for managing a group;
Fig. 4 is a view showing tables configured in a terminal manager and a group manager to determine whether an incoming call to be received by a gatekeeper corresponds to a general call or a group call;
Fig. 5 is a view illustrating a function for managing a group call;
Fig. 6 is a view illustrating a procedure of sequentially storing group calls in a queue and sequentially processing the group calls stored in the queue;
Fig. 7 is a view illustrating a group call queue state after group calls 1 and 3 are terminated in mid-course;
Figs. 8 to 10 are flow charts depicting a procedure for a group call setup based on an international telecommunications union-telecommunications standardization sector (ITU-T) standard H.323 protocol;

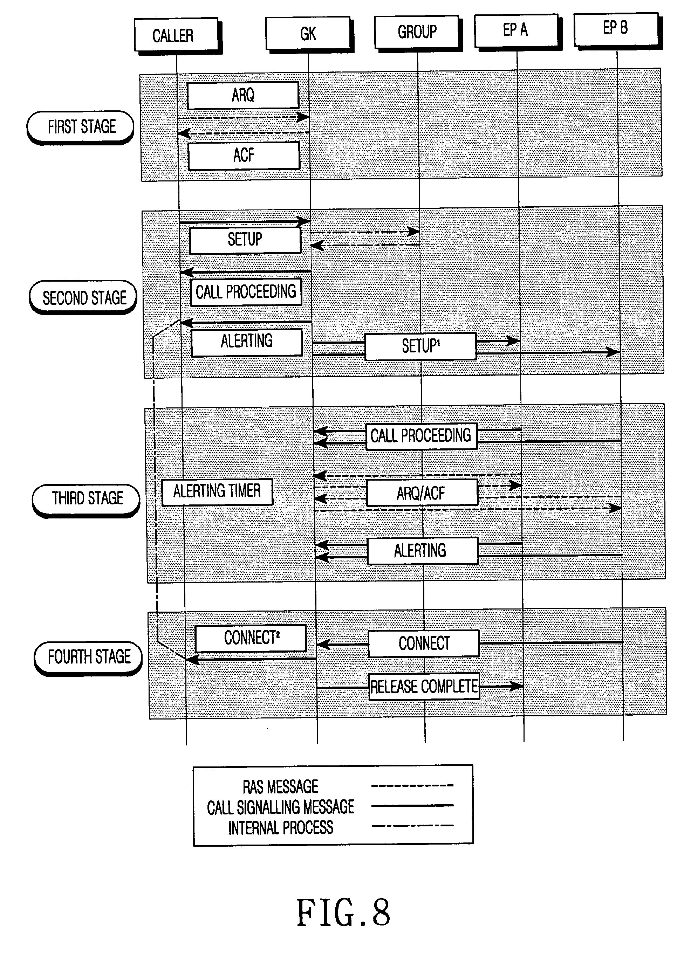

Fig. 8 is a flow chart depicting a group call setup when a group call is normally received;

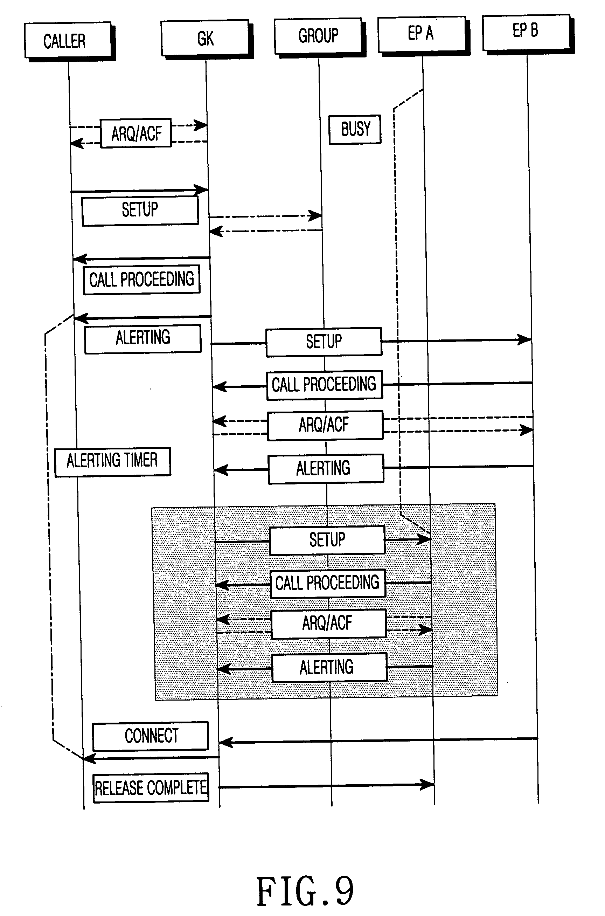

Fig. 9 is a flow chart depicting a group call setup when any member is put in an idle state and another member is in a call proceeding state; and

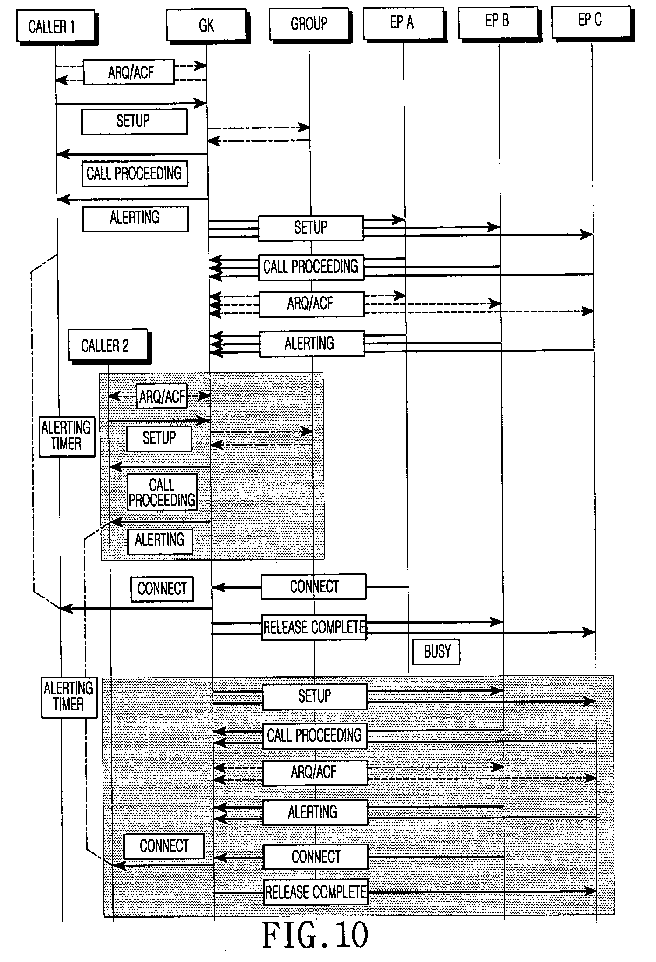

Fig. 10 is a flow chart depicting a group call setup when another group call is received in mid-course of proceeding with a previous group call.

Preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

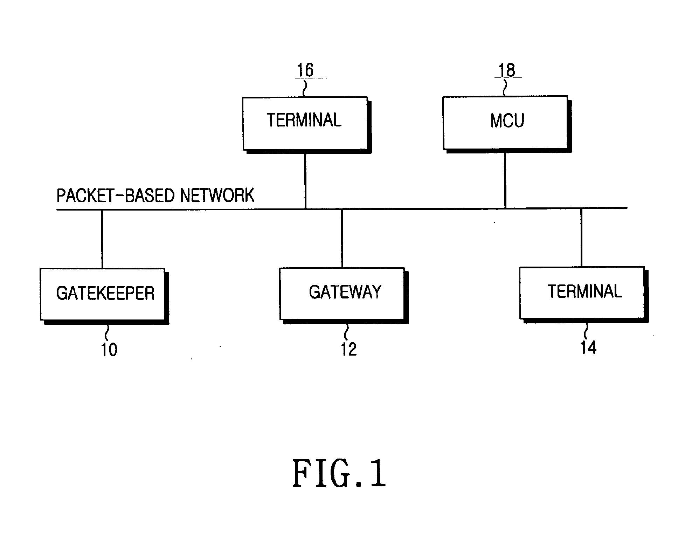

Fig. 1 is a view showing an H.323-based packet network. As shown in Fig. 1, the H.323-based packet network for providing a voice over internet protocol (VoIP) service is largely made up of a gatekeeper 10, H.323 terminals 14 and 16 being endpoints, and a gateway 12. For conference services, the H.323-based packet network further includes a multipoint control unit (MCU) 18. The gatekeeper 10 is the most important component in the H.323-based packet network. The gatekeeper 10 performs major functions relative to registration of the terminals 14 and 16 and the gateway 12 within a zone, address management, call connection control, resource management, etc. The zone is an area in which one gatekeeper 10 manages terminals 14 and 16, the gateway 12, the multipoint control unit 18, etc.

As known to those skilled in the art, the major functions of the gatekeeper 10 are as follows:
Address Translation - Translation of a transport address for an alias address, and creation and updating of an address table through a terminal registration process
Access Control - Network access permission and rejection control on the basis of call right, bandwidth, etc.
Bandwidth control - Bandwidth management and bandwidth permission for a call or rejection of the call
Zone management - Management of terminals, a multipoint control unit (MCU) and a gateway registered on the basis of a formal registration process
Call control signal process - A call signal process for an endpoint, a call signal channel connection between endpoints, and a supplementary service process
Call right allowance - A call limitation and permission for terminals
Bandwidth management - A limitation of the number of concurrent allowable terminals due to resource excess
Call management - A busy state confirmation in a call connection state

In accordance with the present invention, the voice over internet protocol system can provide a group call without modifying the H.323 protocol.

In accordance with the present invention, a group call provision function is performed by the gatekeeper 10, which generally manages calls. No terminal participating in the group call can recognize the group call itself. In other words, the group call is independent of a terminal side. The gatekeeper 10 maintains compatibility with the terminal side in order to provide the group call.

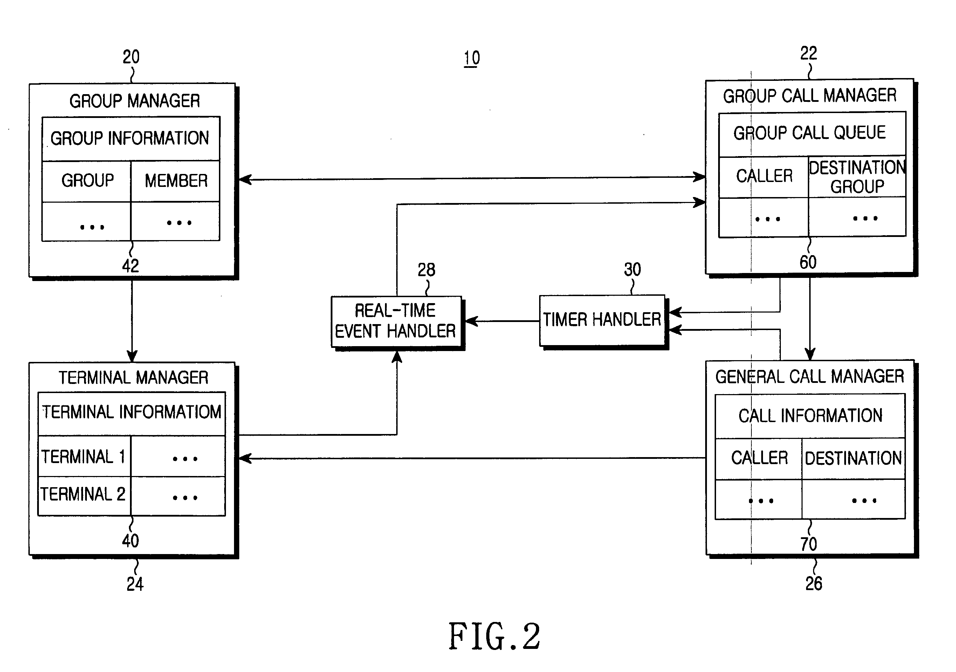

Fig. 2 is a block diagram showing the gatekeeper 10 in accordance with the present invention. As shown in Fig. 2, the gatekeeper 10 includes a group manager 20, a group call manager 22, a terminal manager 24, a general call manager 26, a real-time event handler 28 and a timer handler 30. In Fig. 2, the terminal manager 24 and the general call manager 26 perform general functions in the gatekeeper 10. Further, the terminal manager 24 and the general call manager 26 additionally perform a function for generating a real-time event so that the group call can be provided from the gatekeeper 10. In Fig. 2, the group manager 20, the group call manager 22, the real-time event handler 28 and the timer handler 30 are newly configured function blocks to provide a group call in accordance with the present invention.

The function block configuration is a block configuration in accordance with the present invention and it should be understood that a core process of the gatekeeper 10 carries out the major functions of the gatekeeper 10 described above.

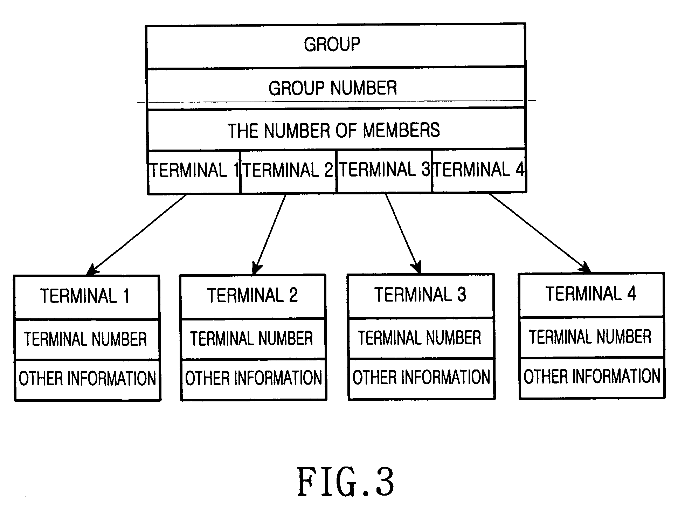

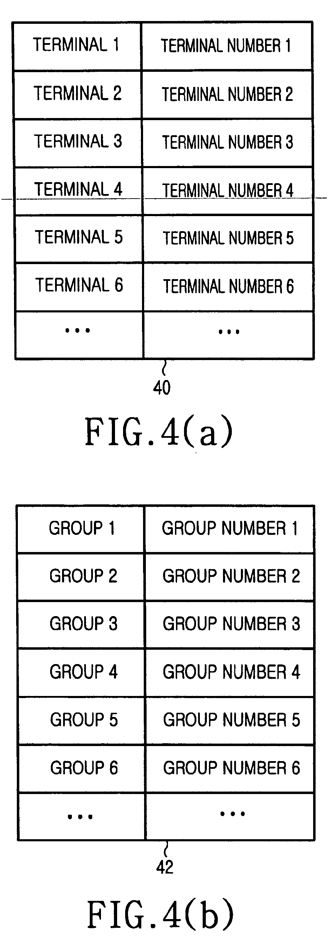

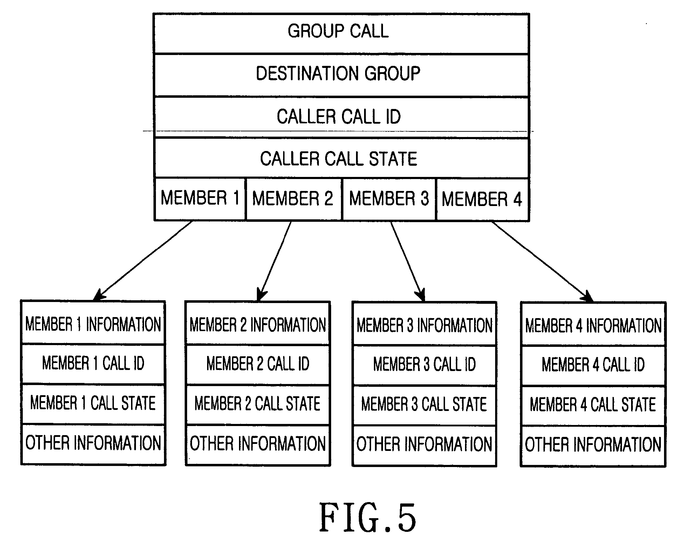

To provide the group call in accordance with the present invention, the gatekeeper 10 performs (1) a group management function, (2) a group call management function, and (3) a terminal management function.
(1) The group management function is performed by the group manager 20 shown in Fig. 2. The group manager 20 uses group information provided from the group call manager 22, manages terminals belonging to a group, determines which terminal belongs to the group, and manages an access number being a group number or a destination number. For these functions, the group manager 20 has a group information table 42. The group and the group information table 42 will be described in detail below in connection with Fig. 3 and Fig. 4(b).
(2) The group call management function is performed by the group call manager 22 shown in Fig. 2. The group call manager 22 manages the group call using the access number, and performs call state management and member state management for the group call. For the sake of a supplementary function related to the group call, the group call management function includes a function for managing a queue storing group calls in order to manage a duplicated group call, and a function for processing an event indicating a group call state in real time in response to a member state. For these functions, the group call manager 22 has a group call queue 60. The group call and the group call queue 60 will be described in detail below in connection with Figs. 5 to 7.
(3) The terminal management function is performed by a terminal manager 24. The terminal manager 24 performs a basic function, and has an additional component for performing the function of indicating a terminal state transition in real time in mid-course of proceeding with the group call. Namely, if the general call manager 24 provides terminal information to the terminal manager 24, the terminal manager 24 stores and updates the terminal information. Further, if the terminal state transition occurs in mid-course of proceeding with the group call, the terminal manager 24 informs the real-time event handler 28 of the event. The general call manager 26 has a call information table 70 which includes caller information and destination information.

As shown in Fig. 2, the procedure of providing the group call in the gatekeeper 10 is as follows:
1) The group call is transferred to respective members belonging to the group.
2) The group call is not transferred to any member which is in a call connection state.
3) If any member is in the call connection state, the group call is transferred to that member after the existing call is terminated.
4) Where any member among the members belonging to the group receives the group call (in a case of the call connection state), other calls of other members being in the call connection state are terminated.
5) After one terminal is put in the call connection state by the group call (that is, after one terminal is connected to a caller terminal), the above procedure is performed if any group call stored in the group call queue 60 is put in a waiting state.

The group management function, the group call management function and the terminal management function performed by the gatekeeper 10 providing the group call in accordance with the present invention will be described in more detail below.
(1) The group management function includes the functions of:
   a) identifying the members belonging to the group;
   b) determining whether an incoming call corresponds to a general call or a group call; and
   c) providing basic information to be used for managing the group call, the basic information including the access number as the group number and the number of the members.

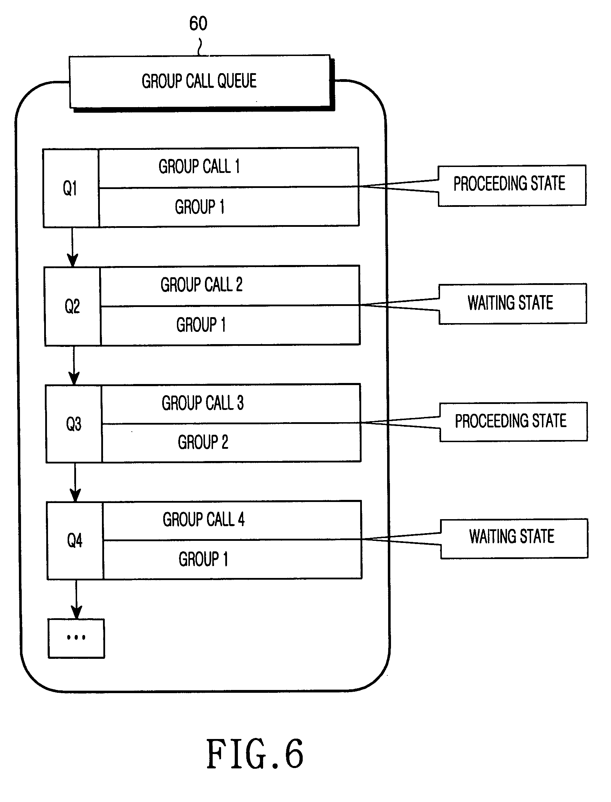

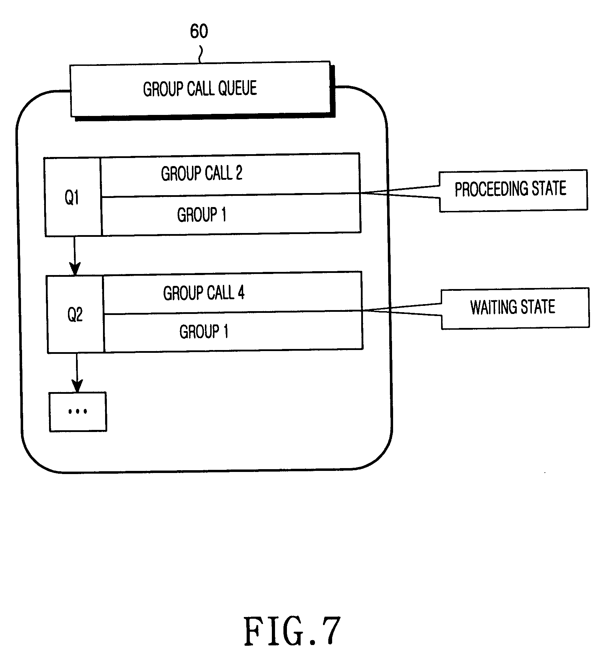

   To identify the members belonging to the group and provide the basic information to be used for managing the group call, the group manager 20 has a group information table 42 shown in Fig. 4(b) and the terminal manager 24 has a terminal information table 40 shown in Fig. 4(a). Conventionally, the terminal information is stored in the terminal information table 40 contained in the terminal manager 24, and the terminal information is configured to process general calls. Further, the group information stored in the group information table 42 of the group manager 20 has only link information corresponding to the terminal information, which already exists in the terminal information table 40 contained in the terminal manager 24.
   Fig. 3 is a view illustrating the group management function performed by the group manager 20 in accordance with the present invention. The group manager 20 defines a plurality of terminals selected by an operator request as one group for taking a group call service, and manages a plurality of groups. To distinguish different groups, the group manager 20 assigns an access number to each group, the number of members belonging to each group (that is, the number of terminals belonging to each group), and terminal information corresponding to the members belonging to each group. For example, as shown in Fig. 3, terminals 1, 2, 3 and 4 are assigned to one group, which has an access number 1, and the number of members corresponding to the access number 1 is "4". Further, the terminal information corresponding to the members is assigned as terminal 1, terminal 2, terminal 3 and terminal 4. The group manager 20 manages the group, the access number, the number of the members, and the terminal information using the group information table 42 shown in Fig. 2. A caller will know the access number as the destination number. For example, the access number may be a representative telephone number of an office.
   As shown in Fig. 3, the terminal information (terminals 1, 2, 3 and 4) of the terminals contained in the group information table 42 includes a terminal number and other information. Further, the terminal information (terminals 1, 2, 3 and 4) of the terminal contained in the group information table 42 has only the link information corresponding to the terminal information, which already exists in the terminal information table 40 contained in the terminal manager 24. Accordingly, the terminal information is managed in the terminal information table 40 shown in Fig. 4(a) by the terminal manager 24. It should be understood that the terminal information of terminals which do not belong to the group can be further managed in the terminal information table 40.
   In accordance with the present invention, the gate keeper 10 can have the plurality of terminals and the plurality of groups. In an embodiment of the present invention, the gatekeeper 10 uses both of two tables, that is, the terminal information table 40 and the group information table 42 shown in Figs. 4(a) and 4(b), so that it is can be determined whether the incoming call corresponds to a general call or a group call. When the gatekeeper 10 receives the incoming call from the caller, the gatekeeper 10 determines, using a destination address (generally referred to as an "alias address"), whether the destination address exists in the terminal information table 40 of the terminal manager 24. If the terminal number corresponding to the destination address exists in the terminal information table 40 of the terminal manager 24, the incoming call is a general call. Otherwise, the incoming call is identified as an incoming call directed to the group. At this time, to identify the incoming call directed to the group, it is determined whether the destination address exists as an access number in the group information table 42 of the group manager 20. If the destination address exists as the access number, the incoming call is determined to be an incoming call directed to the group.
(2) The group call management function
   - Each group call is created by the group call manager 22, and contains caller information and member state information (shown in Fig. 5).
   - A call proceeding procedure of the caller is maintained separately from that of the member.
   - Upon creating the group call, information related to all members is contained in group call information. The call proceeding procedure varies depending upon each member's state.
   - According to the definition of the H.323 protocol, a call identifier (ID) is used for distinguishing different calls, and the call identifier is generated by the caller. However, in terms of an incoming call directed to the group, if the call identifier generated by the caller is used as an identifier of each member belonging to the group, the different calls cannot be distinguished from one another. Thus, the gatekeeper 10 should create a unique call identifier for each member. For this purpose, the group call manager 22 should create call information containing the unique call identifier about each of the members belonging to the group whenever the group call is created. The call information containing the unique call identifier about each of the members created by the group call manager 22 is shown in Fig. 5. The group call contains group information, a call identifier of a caller, a call state of the caller, and member information (members 1, 2, 3, 4), and each item of member information contains a call identifier of a member, a call state of the member, and other information. Each member information (member 1, 2, 3 or 4) contained in the group call queue 60 is shown in Fig. 5. The member information has only the link information for the call information, which already exists in a call information table 70 of the general call manager 26. The member information contained in the group call queue 60 is managed in the call information table 70 by the general call manager 26.
      The group call shown in Fig. 5 is created by the group call manager 22, which uses the group information provided by the group manager 20 and the call information provided from the general call manager 26, and the group call is stored in the group call queue 60 within the group call manager 22.
      Group calls, configured as shown in Fig. 5, are sequentially stored in the group call queue 60 and sequentially processed by the group call manager 22 as shown in Fig. 6. The group calls are calls which are attempted using the same access number by different callers. When the caller attempts the group call first, another caller attempting another group call later should wait; however, when the caller attempting the general call first and a destination corresponding to the general call are in a call connection state, another general call attempted by another caller is terminated without waiting. In other words, although different callers attempt the group calls using the same access number, the group calls are sequentially stored in the group call queue 60. With reference to Fig. 6, a group call 1 directed to a group 1 stored in a queue Q1 is put in a call proceeding state, while group calls 2 and 4 directed to the group 1 are stored in queues Q2 and Q4, respectively, and exist in the waiting state. The group call queue 60 is managed by the group call manager 22 of the gatekeeper 10 in order to sequentially process the group calls as described above. It is reasonable that one group call directed to one group is processed simultaneously with another group call directed to another group, although another group call directed to the other group is in the call proceeding state. Accordingly, the group call manager 22 independently processes the group calls with respect to respective groups. With reference to Fig. 6, the group call 1 directed to group 1 and a group call 3 directed to group 3, which are processed independently from each other, are put in the call proceeding state simultaneously.
      When any group call directed to the group stored in the group call queue 60 reaches its turn to be processed, the group call manager 22 transmits a setup message to respective members belonging to the group. Then, because the group call manager 22 can identify a group call state from the group call information about the respective members belonging to the group, the group call manager 22 does not transmit the setup message to any member of the group taking the group call service.
      In the embodiment shown in Fig. 6, if the group calls 1 and 3 are in the call proceeding state and are then completed (the completion of the group calls 1 and 3 is known by an H.323 message from the terminal), the group call manager 22 removes the group calls 1 and 3 from the group call queue 60. Accordingly, a queue state transition of the group call queue 60 occurs as shown in Fig. 7. A case where the group call is removed from the group call queue 60 is divided into two cases. Firstly, when one of the members of the group receives the group call to proceed with the group call service, the group call is removed from the group call queue 60. Secondly, when no member belonging to the group receive the group call, and therefore an alerting timer for the group call is timed out, the group call is removed from the group call queue 60. Further, when the caller terminates the group call in mid-course, the group call is removed from the group call queue 60. For example, when a particular member belonging to the group receives the group call, the particular member transmits a connect message to the gatekeeper 10. The general call manager 26 of the gatekeeper 10 receives the connect message, and the general call manager 26 transmits the connect message to the group call manager 22 if the connect message is unrelated to the general call. The group call manager 22 identifies the group call related to the connect message to terminate the group call with which the members belonging to the group are proceeding. Accordingly, the transmission of the setup message to respective members belonging to the group is terminated. When the group call with which the members belonging to the group are proceeding is terminated, the group call manager 22 removes the group call from the group call queue 60, and the group call manager 22 notifies the real-time event handler 28, through the timer handler 30, of information relating to an event indicating the removal of the group call.
      The real-time event handler 28, which is notified of the event information indicating the removal of the group call, uses the group call manager 22 to determine whether any group call of the waiting state exists in the group call queue 60. If any group call of the waiting state exists in the group call queue 60, the setup message is transmitted to the members in an idle state, and therefore the members proceed with the group call. In the case of event information notification, the setup message is transmitted to the members belonging to the group by the real-time event handler 28. In the general case, the setup message is transmitted by the group call manager 22.
      The case wherein the group call is removed from the group call queue 60 includes a first case where the particular member receives the group call to proceed with the group call service, and a second case where the group call is terminated in mid-course of proceeding with the group call service. In particular, where the group call is terminated in mid-course of proceeding with the group call service by an alerting timer among timers within the timer handler 30, the group call manager 22 cannot identify the group call termination by the alerting timer. Accordingly, the real-time event handler 28 is notified of the event information from the timer handler 30, and then the real-time event handler 28 allows the group call manager 22 to remove the group call from the group call queue 60. When the gatekeeper 10 transmits the alerting message to the caller in order to proceed with the group call, the group call manager 26 sets a timeout value of the alerting timer. The alerting timer is used for terminating the group call when the connect message is not received from the member within a pre-set timeout value (*e.g.*, about 180 seconds).
      When the particular member belonging to the group receives the group call, and therefore the particular member is connected to the group call, the group call is changed to a general call. Thereafter, the general call manager 70 manages the general call.
(3) The terminal management function
   - Special management function related to the group call
   - If a particular terminal is put in the call proceeding state, the particular terminal cannot receive the group call. However, after the particular terminal releases the group call in mid-course of proceeding with the group call, the particular terminal can receive the group call or participate in the group call.

Because the gatekeeper 10 manages all calls, the terminal manager 24 provides a release event to the real-time event handler 28 when the calls connected to respective terminals are released. The real-time event handler 28 allows a corresponding terminal to participate in the group call. In other words, the setup message is transmitted to the corresponding terminal. In more detail, when any terminal belonging to the group releases the call of the call proceeding state, the general call manager 26 of the gatekeeper 10 transmits the terminal information to the terminal manager 24, and the terminal manager 24 updates existing terminal information. If any terminal whose call has been released by the update belongs to the group, that is, if any terminal belonging to the group is put in the idle state, an event corresponding to the idle state is provided to the real-time event handler 28. Subsequently, the real-time event handler 28 transfers the received event to the group call manager 22. Then, the group call manager 22 allows the terminal in the idle state to participate in the group call. In other words, the setup message is transmitted to the terminal in the idle state.

Figs. 8 to 10 are flow charts depicting a procedure for a group call setup based on an international telecommunications union-telecommunications standardization sector (ITU-T) standard H.232 protocol. More specifically, Fig. 8 is a flow chart depicting the group call setup when the group call is normally received, Fig. 9 is a flow chart depicting the group call setup when any member is put in the idle state in mid-course of proceeding with the group call, and Fig. 10 is a flow chart depicting the group call setup when another group call is received in mid-course of proceeding with the group call. In Figs. 8 to 10, it is assumed that an endpoint (EP) A and an endpoint (EP) B belong to the members of the group. In accordance with the present invention, the procedure of providing the group call is based on an H.323 message. Further, it should be understood that the term "group" shown in Figs. 8 to 10 denotes the group manager 20 and the group call manager 22 within the gatekeeper 10.

A procedure for normally receiving the group call in accordance with the present invention is divided into four stages, and the processes of respective stages are as follows:
1) A first stage
   If the caller calls any group, the access number is contained in a destination number field of an admission request (ARQ) message to be transmitted from the caller, and the admission request message is transmitted from the caller to the gatekeeper 10. The gatekeeper 10 receives the admission request message and determines, using the group manager 20, whether the destination number exists in the general terminal information or the group information. Then, if the destination number exists in the group information, the gatekeeper 10 senses that the call corresponds to the group call. Further, the gatekeeper 10 determines whether a group state corresponding to the group call is valid. If the group state corresponding to the group call is valid, the gatekeeper 10 transmits an admission request confirm (ACF) message. If no member exists in the group or the number of group calls exceeds the predetermined number of group calls in the group call queue 60, the group state is invalid, and therefore the gatekeeper 10 sends an admission reject (ARJ) message to the caller in order to terminate the group call.
2) A second stage
   The caller receiving the admission request confirm message from the gatekeeper 10 transmits the setup message to the gatekeeper 10 to enter a full-scale call setup. If the gatekeeper 10 receives the setup message, the gatekeeper 10 transmits call proceeding and alerting messages to the caller, unlike in the conventional H.323 protocol. When the gatekeeper 10 receives the setup message on the basis of the conventional H.323 protocol, the gatekeeper 10 transmits the setup message to the destination, and receives the call proceeding and alerting messages from the destination to transmit the call proceeding and alerting messages to the caller. However, in the procedure of processing the group call in accordance with the present invention, the call proceeding and alerting messages are provided to the caller for the case where a corresponding group does not have any member being in the idle state.
   Further, the gatekeeper 10 finds the members presently in the idle state in the group corresponding to the access number using the group manager 20, and the gatekeeper 10 transmits the setup message to the members endpoint A and endpoint B in the idle state. In this case, the gatekeeper 10 should modify the contents of the setup message to be transmitted to the members endpoint A and endpoint B. The group call manager 22 of the gatekeeper 10 assigns different call identifiers (call identifiers of the members) to respective destinations, and modifies destination information to real member information. The reason that the group call manager 22 modifies the destination information is because the destination information contained in a first setup message is the group information rather than the member information.
3) A third stage
   In the third stage, a call setup procedure is independently applied to the respective members receiving the setup messages. Because the contents of the setup messages transmitted from the group call manager 22 to the respective members at the second stage are different from one another, the gatekeeper 10 should distinguish the different contents of the setup messages, and should simultaneously identify a same group call corresponding to the setup messages having the different contents. The group call manager 22 of the gatekeeper 10 distinguishes the different contents of the setup messages, and simultaneously identifies the same group call corresponding to the setup messages having different contents using the group call information (shown in Fig. 5) stored in the group call queue 60.
4) A fourth stage
   The fourth stage explains a call connection procedure. One of the members (*e.g.*, the endpoint B of Fig. 8) first receives the call, the member endpoint B transmits the connect message to the gatekeeper 10, and the gatekeeper 10 transmits the connect message to the caller. However, the gatekeeper 10 should recover the call identifier and the caller information for a previous state before modification because the connect message is affected due to the modification of the setup message. In other words, the gatekeeper 10 recovers the call identifiers of the members to the call identifier of the group. Because the group call manager 22 of the gatekeeper 10 has the information of the previous state before modification as the group call information, the gatekeeper 10 can recover the call identifiers of the members and the caller information for the previous state before modification.

After the gatekeeper 10 transmits the connect message to the caller, the gatekeeper 10 transmits a release complete (ReleaseComplete) message to the remaining member endpoint A in order to terminate the call setup procedure.

Next, Fig. 9 is a flow chart for explaining a call setup procedure based on an H.323 group call when one member is put in the idle state and another member is put in the call proceeding state.

In the procedure of processing the group calls, the member endpoint A in the call proceeding state cannot receive the group call. However, when the member endpoint A is put in the idle state, the gatekeeper 10 transmits the setup message to the member endpoint A so as to independently perform the call setup procedure with respect to the member endpoint A. In more detail,. when the member endpoint A is put in the idle state, the terminal manager 24 (where the general call is terminated) or the group call manager 22 (where the group call is terminated) notifies the real-time event handler 28 of the idle state as an event. The real-time event handler 28 notified of the event information, allows the group call manager 22 to determine whether another member in the call proceeding state exists in the group.

The call setup procedure shown in Fig. 9 is different from the normal call setup procedure shown in Fig. 8 in that, when one member is put in the idle state, other members asynchronously perform the call setup procedure.

Finally, Fig. 10 is a flowchart for explaining the call setup procedure based on the H.232 group call in accordance with the present invention when another group call is received in mid-course of proceeding with the group call.

When a caller 1 is already put in the call proceeding state and the gatekeeper 10 receives a new group call directed to the same group as the caller 1 from a caller 2, the gatekeeper 10 adds the new group call to the group call queue 60, and transmits the call proceeding message and the alerting message to the caller 2 so that the caller 2 waits for the connect message from the destination. When the group call previously received is terminated in mid-course of waiting for the connect message, the group call manager 22 removes the group call previously received from the group call queue 60, and provides to the real-time event handler 28 information as to the event of the removal of the group call. The real-time event handler 28, receiving the information as to the event, determines whether any group call of the waiting state remains in the group call queue 60. If any group call in the waiting state remains in the group call queue 60, the setup message is transmitted to the members corresponding to the group call in the waiting state, and therefore a new group call setup is accomplished. Thereafter, the next procedure is the same as the procedure for the general group call setup.

As is apparent from the above description, the present invention provides the group call capability in an H.323 (voice over internet protocol) system. The H.323 system can provide the group call capability without modifying the H.323 protocol. Further, the present invention has an advantage in that the H.323 (voice over internet protocol) system can provide the group call capability only through expansion of a gatekeeper.

Although the preferred embodiments of the present invention have been disclosed for illustrative purposes, those skilled in the art will appreciate that various modifications, additions and substitutions are possible.

## Claims

1. A method for controlling an incoming call directed to a group in a voice over internet protocol (VoIP) system, comprising the steps of:
(a) defining a plurality of terminals selected by an operator request as a group for taking a group call service;
(b) creating terminal information for the selected plurality of terminals and group information for a plurality of defined groups in the form of a table;
(c) determining, using the table, whether the incoming call is directed to the group upon receiving the incoming call;
(d) generating a group call using the group information when the incoming call is directed to the group; and
(g) transmitting the group call to respective members belonging to the group.

2. The method according to claim 1, wherein step (b) further comprises managing the table.

3. The method according to claims 1 or 2, wherein the incoming call is directed to a group in a gatekeeper of the voice over internet protocol (VoIP) system.

4. The method according to claims 1 to 3, wherein the group information comprises at least access numbers or a number of members belonging to the group or the terminal information corresponding to the respective members belonging to the group.

5. The method according to claims 1 to 4, wherein the terminal information comprises at least terminal numbers corresponding to the respective members belonging to the group.

6. The method according to claims 1 to 5, wherein the group call comprises at least destination group information or the group information or caller call identifiers (IDs) or caller call states or member information.

7. The method according to claim 6, wherein the member information comprises at least member call IDs or member call states.

8. The method according to claim 7, wherein the member call ID is a unique member call ID.

9. The method according to claims 1 to 8, wherein a plurality of incoming calls is directed to groups in a voice over internet protocol (VoIP) system and each of the incoming calls is directed to the group upon sequentially receiving the incoming calls.

10. The method according to claim 9, further comprising:
(e) storing group calls in a queue; and
(f) distinguishing different groups for the group calls stored in the queue,
wherein the group call is transmitted to members in an idle state.

11. The method according to claim 10, further comprising the step of:
(h) removing the group call from the queue when the group call is terminated.

12. The method according to claim 11, wherein step (h) includes the steps of:
(h-1) removing the group call from the queue when one of members belonging to the group receives the group call;
(h-2) removing the group call from the queue when no member belonging to the group receives the group call; and
(h-3) removing the group call from the queue when a caller terminates the group call in mid-course.

13. The method according to claim 12, wherein step (h-2) further comprises timing out an alerting timer for the group call.

14. The method according to claims 10 to 13, wherein step (g) further comprises independently transmitting the group call to the members in the idle state.

15. The method according to claims 12 to 14, wherein the group call is removed from the queue when one of the members belonging to the group receives the group call to proceed with the group call service and wherein an alerting timer is timed out for the group call in step (h-2).

16. An apparatus for controlling an incoming call directed to a group in a voice over internet protocol (VoIP) system, comprising:
defining means for defining a plurality of terminals (14, 16) selected by an operator request as a group for taking a group call service;
creating means for creating terminal information (40) for the selected plurality of terminals and group information (42) for a plurality of defined groups in the form of a table;
determining means for determining, using the table, whether the incoming call is directed to the group upon receiving the incoming call;
generating means for generating a group call using the group information when the incoming call is directed to the group; and
transmitting means for transmitting the group call to respective members belonging to the group.
